# EUROPEAN PATENT SPECIFICATION

(11) **EP 1 666 656 B1**
(45) Date of publication and mention of the grant of the patent: **29.06.2016**
(21) Application number: 05255237.9
(22) Date of filing: 25.08.2005
(51) Int. Cl.: D06F 37/26

(54) **DRUM TYPE WASHING MACHINE**
TROMMELWASCHMASCHINE
MACHINE À LAVER À TAMBOUR

(30) Priority: 02.12.2004 KR 2004100604
(43) Date of publication of application: 07.06.2006
(73) Proprietor: Samsung Electronics Co., Ltd., Suwon-si, Gyeonggi-do, 443-742 (KR)
(72) Inventor: Oh, Je Jun, Seoul (KR); Roh, Hyoung Hoon, Yeongtong-Gu, Suwon-Si, Gyeonggi-Do (KR); Lee, Jung Ho, Gangnam-Gu, Seoul (KR)
(74) Representative: Appleyard Lees IP LLP

(56) References cited:
- GB-A- 1 461 073
- GB-A- 2 387 895
- US-A1- 2004 194 514
- PATENT ABSTRACTS OF JAPAN vol. 2003, no. 12, 5 December 2003 (2003-12-05) & JP 2004 008543 A (MATSUSHITA ELECTRIC IND CO LTD), 15 January 2004 (2004-01-15)

## Description

The present invention relates to a drum type washing machine, and, more particularly, to a drum type washing machine capable of effectively lowering a relative humidity inside a water tub within a short time.

Generally, a drum type washing machine is an apparatus that repeatedly performs a wash cycle, rinse cycle, etc to wash laundry. In such a drum type washing machine, laundry is raised and subsequently falls down to be washed by virtue of an impact applied thereto when it falls down.

A conventional drum type washing machine, as disclosed in Korean Patent Laid-Open No. 10-2004-61155, comprises a housing forming an external appearance of the washing machine, a cylindrical water tub mounted in the housing and adapted to contain wash water, a rotating tub rotatably mounted in the water tub, a drive motor mounted at the rear side of the water tub and adapted to produce a driving force required to rotate the rotating tub, and a rotating shaft penetrating through the water tub to transmit the driving force of the drive motor to the rotating tub to thereby enable rotation of the rotating tub.

The rotating tub has a single vent hole perforated at a rear region thereof for the inflow or outflow of air. The vent hole serves to lower a relative humidity inside the water tub.

In the case of the conventional drum type washing machine, however, since the vent hole permits only a very small inflow or outflow of air, it takes a considerably long time to dry the interior of the water tub using the vent hole. Even in the initial stage of drying, adversely, moisture inside the water tub evaporates, increasing the relative humidity inside the water tub.

GB 2387895 discloses a combined washer-dryer machine having a drying unit for drying laundry. The drying unit comprises an air circulation duct, a blower and a heater. The air circulation duct consists of a condensing tube which is connected to a portion of the machine tub and the blower, and an air tube which is connected to a further portion of the tub and the blower. When the machine operates as a dryer, air from the tub is directed up the condensing tube where water in the air is condensed. Dehumidified air is then driven to the blower where it is directed to the heater and sent back into the tub. Movement of air is dependent on the action of the blower. An aeration tube is provided in a ventilation device attached to the condensing tube, so as to provide natural ventilation to the tub.

The present invention has been made to solve the above mentioned problems, as well as other problems not discussed above.

An apparatus consistent with the present invention provides a drum type washing machine capable of effectively lowering a relative humidity inside a water tub within a short time.

According to the present invention there is provided an apparatus and method as set forth in the appended claims. Preferred features of the invention will be apparent from the dependent claims, and the description which follows. In accordance with one aspect, the present invention provides a drum type washing machine comprising a water tub adapted to contain wash water therein, wherein the water tub comprises a plurality of vent holes to circulate air to and from the water tub, at least one of the vent holes being positioned higher than the other vent hole.

The plurality of vent holes may include a first vent hole and a second vent hole, the first vent hole being positioned higher than the second vent hole.

The first and second vent holes may be formed at first ends of first and second connection pipes connected to the water tub at their second ends, respectively.

The second connection pipe may be a suction pipe to introduce outside air into the water tub, and the first connection pipe may be a discharge pipe to discharge interior air of the water tub to the outside.

The second end of the second connection pipe, connected to the water tub, may be positioned lower than the first vent hole.

The height difference between the first and second vent holes may be in a range of 80 to 120mm.

The diameter of the first and second vent holes may be substantially 70mm.

In accordance with one aspect, the present invention provides a drum type washing machine comprising: a water tub adapted to contain wash water therein; and first and second ventilation portions provided at the water tub and adapted to circulate outside air to and from the water tub, the first ventilation portion being positioned higher than the second ventilation portion.

The first and second ventilation portions may include first and second vent holes formed at first ends of first and second connection pipes connected at their second ends to the water tub to communicate with the interior of the water tub.

The second end of the second connection pipe connected to the water tub may be positioned lower than the first vent hole.

The first and second ventilation portions may include first and second vent holes formed at the water tub.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a side view of a drum type washing machine in accordance with an exemplary embodiment of the present invention;
FIG. 2 is a diagram explaining the operating principle of the drum type washing machine in accordance with the present invention;

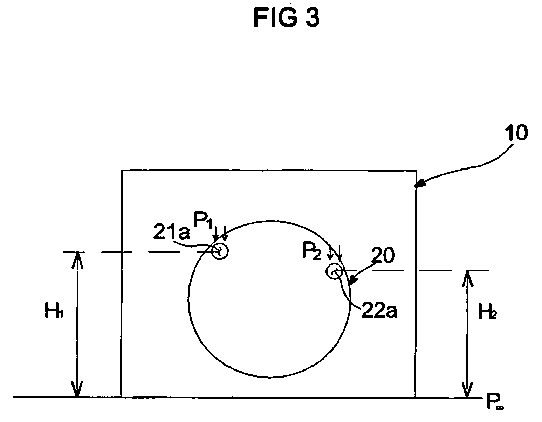

FIG. 3 is a diagram of a drum type washing machine in accordance with an exemplary embodiment of the present invention not within the scope of the appended claims; and
FIG. 4 is a graph illustrating relative humidity according to the passage of time inside a water tub of the drum type washing machine in accordance with the present invention, as compared to a prior art drum type washing machine.

Reference will now be made in detail to the embodiments of the present invention, examples of which are illustrated in the accompanying drawings, wherein like reference numerals refer to the like elements throughout.

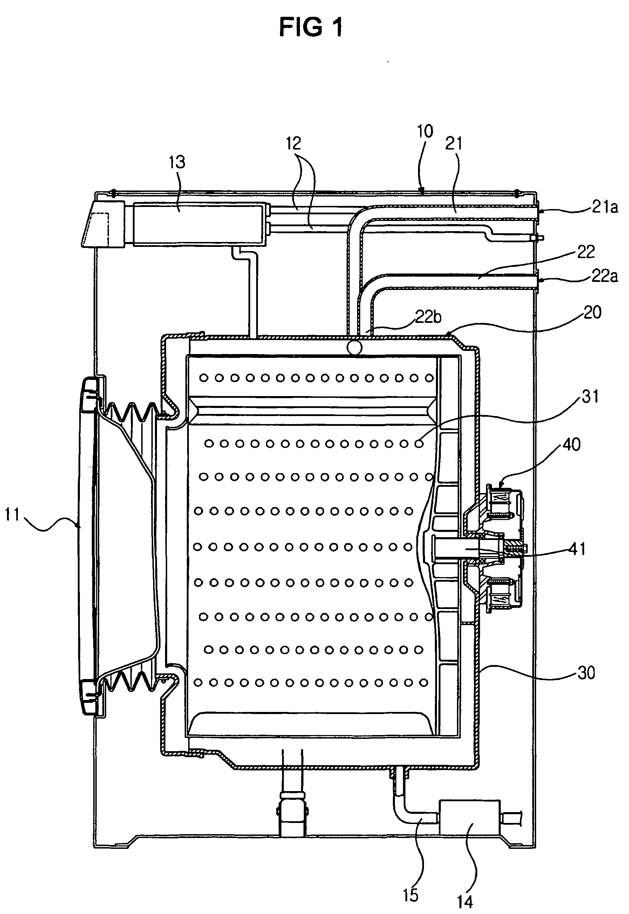

FIG. 1 illustrates a drum type washing machine in accordance with the present invention. The drum type washing machine comprises a housing 10 forming an external appearance of the washing machine, a water tub 20 mounted in the housing 10 in a suspended state and adapted to contain wash water, and a cylindrical rotating tub 30 rotatably mounted in the water tub 20 and formed with a plurality of dehydrating holes 31 at a circumferential wall thereof. In addition, a drive motor 40 is mounted to a rear end of the water tub 20 outside the water tub 20. A rotating shaft 41 of the drive motor 40 is fixedly coupled to the rotating tub 30 to transmit a rotating force from the drive motor 40 to the rotating tub 30, thereby rotating the rotating tub 30.

The water tub 20 and the rotating tub 30 are formed at their front sides with respective openings to put laundry into or take it out of the rotating tub 30, and a door 11 is hinged at a front side of the housing 10 to open or close the openings of the water tub 20 and the rotating tub 30.

Installed at the top of the housing 10 are a water supply pipe 12 for receiving wash water from an external water supply source, and a detergent container 13 for containing detergent and mixing a detergent with the wash water supplied via the water supply pipe 12. A drainage pump 14 and a drainage hose 15 are installed at the bottom of the housing 10 in order to drain wash water to the outside of the housing 10 after completing washing of laundry.

The drum type washing machine of the present invention further comprises first and second ventilation portions provided at the rear region of an upper end of the water tub 20 to admit circulation of outside air to and from the water tub 20, thereby enabling natural ventilation in the water tub 20.

In the present exemplary embodiment, the first ventilation portion includes an L-shaped first connection pipe 21 extending rearward by a first predetermined length, the connection pipe 21 having a first end affixed to the upper end of the water tub 20 to communicate with the interior of the water tub 20 and a second end forming a first vent hole 21a. Similarly, the second ventilation portion includes an L-shaped second connection pipe 22 extending rearward by a second predetermined length and having a first end affixed to the upper end of the water tub 20 to communicate with the interior of the water tub 20 and a second end forming a second vent hole 22a.

Here, the first vent hole 21a is positioned higher than the second vent hole 22 to cause circulation of outside air through the first and second vent holes 21a and 22a if a relative humidity inside the water tub 20 is high. More specifically, as a height H₁ of the first vent hole 21a, measured from the ground surface, is higher than a height H₂ of the second vent hole 22a, outside air is able to be introduced into the water tub 20 through the second vent hole 22a, and interior air of the water tub is able to be discharged through the first vent hole 21a.

In such a configuration as stated above wherein the first and second vent holes 21a and 22a are formed by the second ends of the first and second connection pipes 21 and 22 having the first ends affixed to the water tub 20 to communicate with the water tub 20, the second connection pipe 22 having the second vent hole 22a operates as a suction pipe to introduce outside air into the water tub 20, and the first connection pipe 21 having the first vent hole 21a operates as a discharge pipe to discharge interior air of the water tub 20 to the outside.

Further, in the present invention, the first end 22b of the second connection pipe 22, which is affixed to the water tub 20 to communicate with the water tub 20, has a height H₂' lower than the height H₁ of the first vent hole 21a to enable continuous circulation of air. The greater a height difference between the first and second vent holes 21a and 22a and a diameter of the vent holes 21a and 22a, the greater the efficiency of ventilation in the water tub 20. Preferably, in consideration of sizes of the housing 10 and the water tub 20, the first and second vent holes 21a and 22a have a diameter of approximately 70mm, and a height difference of approximately 80 to 120mm. In the present exemplary embodiment, the diameter of the first and second vent holes 21a and 22a is 68mm, and the height difference between the holes is 100mm.

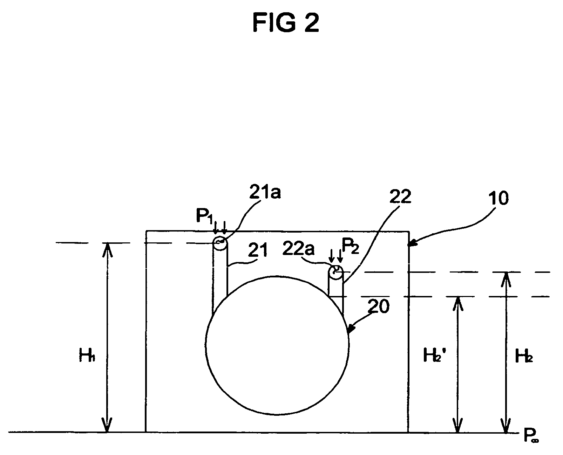

Now, the principle of natural ventilation in the water tub 20 of the drum type washing machine using the first and second vent holes 21a and 22a will be explained in detail with reference to FIG. 2.

Initially, as moisture, remaining in the water tub 20, naturally evaporates, the interior of the water tub 20 has a relative humidity higher than that of outside air. The higher the relative humidity, the higher the rate of vapor having a mass smaller than oxygen or nitrogen, resulting in a decrease in the density of air. For this reason, interior air of the water tub 20 has a density lower than the outside air.

Further, according to the present invention, since there exists a height difference between the first and second vent holes 21a and 22a, different external air pressures are applied to the first and second vent holes 21a and 22a. As well known, the air pressure increases toward the ground surface and becomes the highest at the ground surface. Thus, the air pressure P₂, that is applied to the second vent hole 22a located close to the ground surface as compared to the first vent hole 21a, is higher than the air pressure P₁ that is applied to the first vent hole 21a located higher than the second vent hole 22a.

With such a configuration, the outside air, having a high density due to its low relative humidity, is introduced into the water tub 20 through the second vent hole 22a, to which the relatively high air pressure is applied. Thereby, the interior air of the water tub 20, having a low density due to its high relative humidity, is pushed out by the introduced high density outside air, thereby being discharged to the outside through the first vent hole 21a to which the relatively low air pressure is applied. In this way, the outside air is introduced into the water tub 20 and the interior air of the water tub 20 is discharged to the outside to admit natural ventilation in the water tub 20, resulting in a rapid and effective lowering in the relative humidity inside the water tub 20.

In the present invention, it is important that the first vent hole 21a is positioned higher than the first end 22b of the second connection pipe 22 affixed to the water tub 20 in order to ensure continuous ventilation in the water tub 20. If the first vent hole 21a is positioned lower than the first end 22b of the second connection pipe 22, it may cause the high density outside air, introduced through the second vent hole 22a, to flow directly to the first vent hole 21a without circulating in the water tub 20.

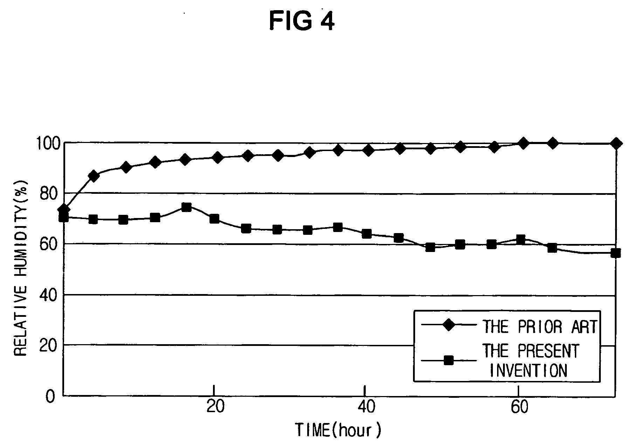

FIG. 4 is a graph illustrating relative humidity according to the passage of time, inside the water tub of the present invention having the first and second vent holes, as compared to a prior art water tub having only one vent hole.

As can be clearly confirmed from FIG. 4, in the case of the prior art water tub having only one vent hole, it exhibits an insufficient inflow or outflow of air via the vent hole, resulting in an increase of the relative humidity inside the water tub as moisture in the water tub evaporates. On the contrary, in the case of the present invention wherein the water tub is provided with a pair of the first and second vent holes at different heights, it ensures smooth circulation of air by virtue of a pressure difference, thereby enabling a rapid lowering of the relative humidity inside the water tub.

As is apparent from the above description, the present invention provides a drum type washing machine capable of effectively lowering a relative humidity inside a water tub within a short time. For this, the present invention suggests that a water tub is provided with a pair of first and second vent holes at different heights to produce a pressure difference. Thereby, if the relative humidity inside the water tub is higher than outside air, outside air can be introduced into the water tub through the second vent hole that is positioned lower than the first vent hole, and interior air of the water tub is discharged to the outside through the first vent hole, thereby allowing the relative humidity inside the water tub to be lowered within a short time by virtue of air circulation.

## Claims

1. A drum type washing machine comprising:
a water tub (20) adapted to contain wash water therein, and
first and second ventilation portions respectively allowing circulation of air from and to the water tub (20) by natural ventilation,
wherein:
the first ventilation portion includes a first connection pipe (21) having a first end connected to the water tub (20) and a second end forming a first vent hole (21a) to discharge the interior air of the water tub (20) to the outside, and
the second ventilation portion includes a second connection pipe (22) having a first end (22b) connected to the water tub (20) and a second end forming a second vent hole (22a) to introduce the outside air into the water tub (20), the first vent hole (21a) being positioned higher than the second vent hole (22a);
**characterised in that** the first vent hole (21a) discharging the interior air of the water tub (20) to the outside air is separated from the second vent hole (22a) introducing outside air into the water tub..

2. The washing machine according to claim 1, wherein said connection pipes (21, 22) are connected to the water tub (20) to communicate with the interior of the water tub (20).

3. The washing machine according to claim 1 or 2, wherein the first end of the second connection pipe (22), connected to the water tub (20), is positioned lower than the first vent hole (21a).

4. The washing machine according to any preceding claim, wherein the height difference between the first and second vent holes (21a, 22a) is in a range of 80 to 120mm.

5. The washing machine according to any preceding claim, wherein the diameter of the first and second vent holes (21a, 22a) is substantially 70mm.

## Patentansprüche

1. Trommelwaschmaschine, aufweisend:
einen Wasserbehälter (20), der ausgebildet ist, Waschwasser aufzunehmen, und
einen ersten und zweiten Ventilationsteil, die eine Luftzirkulation aus dem bzw. in den Wasserbehälter (20) durch natürliche Ventilation ermöglichen,
wobei:
der erste Ventilationsteil ein erstes Verbindungsrohr (21) enthält, dessen erstes Ende mit dem Wasserbehälter (20) verbunden ist und dessen zweites Ende eine erste Lüftungsöffnung (21a) bildet, um die Innenluft des Wasserbehälters (20) an die Außenseite abzugeben, und
der zweite Ventilationsteil ein zweites Verbindungsrohr (22) enthält, dessen erstes Ende (22b) mit dem Wasserbehälter (20) verbunden ist und dessen zweites Ende eine zweite Lüftungsöffnung (22a) bildet, um die Außenluft in den Wasserbehälter (20) einzuleiten, wobei die erste Lüftungsöffnung (21a) höher als die zweite Lüftungsöffnung (22a) positioniert ist;
**dadurch gekennzeichnet, dass** die erste Lüftungsöffnung (21a), welche die Innenluft des Wasserbehälters (20) an die Außenluft abgibt, von der zweiten Lüftungsöffnung (22a) getrennt ist, die Außenluft in den Wasserbehälter einleitet.

2. Waschmaschine nach Anspruch 1, wobei die Verbindungsrohre (21, 22) mit dem Wasserbehälter (20) verbunden sind, um mit dem Inneren des Wasserbehälters (20) zu kommunizieren.

3. Waschmaschine nach Anspruch 1 oder 2, wobei das erste Ende des zweiten Verbindungsrohres (22), das mit dem Wasserbehälter (20) verbunden ist, tiefer positioniert ist als die erste Lüftungsöffnung (21a) .

4. Waschmaschine nach einem vorangehenden Anspruch, wobei der Höhenunterschied zwischen der ersten und zweiten Lüftungsöffnung (21a, 22a) in einem Bereich von 80 bis 120 mm liegt.

5. Waschmaschine nach einem vorangehenden Anspruch, wobei der Durchmesser der ersten und zweiten Lüftungsöffnung (21a, 22a) im Wesentlichen 70 mm beträgt.

## Revendications

1. Machine à laver à tambour comprenant :
une cuve à eau (20) conçue pour contenir une eau de lavage à l'intérieur d'elle, et
des première et seconde parties de ventilation permettant respectivement la circulation d'air depuis et vers la cuve à eau (20) par ventilation naturelle,
la première partie de ventilation comprenant un premier conduit de raccordement (21) comportant une première extrémité raccordée à la cuve à eau (20) et une seconde extrémité formant un premier orifice d'évent (21a) servant à évacuer l'air intérieur de la cuve à eau (20) vers l'extérieur, et
la seconde partie de ventilation comprenant un second conduit de raccordement (22) comportant une première extrémité (22b) raccordée à la cuve à eau (20) et une seconde extrémité formant un second orifice d'évent (22a) servant à introduire de l'air extérieur dans la cuve à eau (20), le premier orifice d'évent (21a) étant positionné plus haut que le second orifice d'évent (22a) ;
**caractérisée en ce que** le premier orifice d'évent (21a) évacuant l'air intérieur de la cuve à eau (20) vers l'air extérieur est séparé du second orifice d'évent (22a) introduisant de l'air extérieur dans la cuve à eau.

2. Machine à laver selon la revendication 1, dans laquelle lesdits conduits de raccordement (21, 22) sont raccordés à la cuve à eau (20) de façon à communiquer avec l'intérieur de la cuve à eau (20).

3. Machine à laver selon la revendication 1 ou 2, dans laquelle la première extrémité du second conduit de raccordement (22), raccordée à la cuve à eau (20), est positionnée plus bas que le premier orifice d'évent (21a).

4. Machine à laver selon l'une quelconque des revendications précédentes, dans laquelle la différence de hauteur entre les premier et second orifices d'évent (21a, 22a) est située dans la plage de 80 à 120 mm.

5. Machine à laver selon l'une quelconque des revendications précédentes, dans laquelle le diamètre des premier et second orifices d'évent (21a, 22a) est sensiblement de 70 mm.
